# FASCICULE DE BREVET EUROPEEN

(11) **EP 0 482 977 B1**
(45) Date de publication et mention de la délivrance du brevet: **02.01.1997**
(21) Numéro de dépôt: 91402711.5
(22) Date de dépôt: 10.10.1991
(51) Int. Cl.: F16D 3/20, F16C 3/02

(54) **Corps de joint de transmission du type comportant une bride de liaison**
Übertragungsgelenkkörper mit einer Verbindungsflansche
Transmission joint body with a connecting flange

(30) Priorité: 22.10.1990 FR 9013038
(43) Date de publication de la demande: 29.04.1992
(73) Titulaire: GKN GLAENZER SPICER, F-78955 Carrières-sous-Poissy (FR)
(72) Inventeur: Rouillot, Michel, F-78100 St Germain en Laye (FR); Poulin, Bernard, F-78700 Conflans Ste Honorine (FR); Margerie, Michel, F-95510 Vetheuil (FR)
(74) Mandataire: Polus, Camille

(56) Documents cités:
- EP-A- 0 335 781
- WO-A-84/03544
- FR-A- 1 268 917
- FR-A- 2 169 450
- FR-A- 2 508 851
- FR-A- 2 619 878
- US-A- 2 194 798

## Description

La présente invention a pour objet un corps pour joint de transmission du type comportant une enveloppe à l'intérieur de laquelle sont prévus des chemins de portée d'éléments d'articulation d'un joint de transmission et un système de liaison de ce corps de joint à un arbre de transmission ou à toute autre partie d'une transmission mécanique notamment de véhicule automobile.

L'invention concerne plus particulièrement un corps de joint de transmission dont le système de liaison comporte une bride radiale reliée à l'enveloppe. On connaît des corps de joint de transmission de ce type réalisés en une seule pièce en métal et dont la bride de fixation est venue de matière par matricage ou par moulage puis usinée.

On sait que le poids d'une telle bride est particulièrement élevé, et qu'une telle conception ne permet que peu de variations dans le dessins de la bride et ne permet pas de concevoir des corps de joints de transmission standard dont seul le système de liaison diffère selon l'application envisagée.

On connaît d'après le document EP-A-0335 781 un corps de joint composite comprenant une enveloppe en un matériau composite à matrice organique renforcée par des fibres continues, des chemins de portée métalliques, et une masse de matériau de remplissage enrobant au moins en partie cette enveloppe et les chemins de portée, ce corps de joint étant complété par un système de liaison constitué par une queue métallique dont une extrémité est noyée dans la masse de matériau de remplissage.

On connaît par ailleurs d'après le document FR-A-2 169 450, un corps de joint formé simplement de chemins de portée métalliques, enrobés dans une pièce en matière plastique délimitant une bride de fixation.

En présence de cet état de la technique, le problème que l'invention vise à résoudre est de réaliser un corps de joint qui soit plus léger que les joints connus et soit d'une utilisation plus souple.

A cet effet, l'invention propose un corps de joint de transmission à structure composite, comportant une enveloppe réalisée en un matériau composite, des chemins de portée d'éléments d'articulation d'un joint de transmission disposés à l'intérieur de ladite enveloppe, cette dernière et les chemins de portée étant au moins en partie noyés dans une masse de matériau de remplissage constitué d'une matrice thermodurcissable ou thermoplastique renforcée de fibres courtes ou de particules, et un système de liaison du corps de joint, caractérisé en ce que le système de liaison du corps de joint comporte une bride radiale qui s'étend radialement à l'extérieur de l'enveloppe et qui est formée par une extension axiale et radiale de ladite masse de matériau de remplissage.

La combinaison selon l'invention permet de remédier aux inconvénients mentionnés précédemment et d'obtenir une conception d'un corps de joint de transmission à bride radiale de poids très faible et permettant la transmission de couples élevés. En effet, la transmission des efforts entre la bride et les pistes s'effectue à travers la masse de matériau de remplissage et l'enveloppe sans nécessiter un mode de liaison particulier entre la bride proprement dite et l'enveloppe du corps de joint de transmission et sans faire appel à des composants de dimensions trop importantes, ni à des épaisseurs ou quantités trop importantes de matériau de remplissage, ce dernier pouvant avoir une structure et une composition sensiblement identiques à celles mentionnées dans le document EP-A-0 335 781 tout en assurant une liaison efficace et fiable avec la bride qu'il constitue au moins partiellement.

Selon d'autres caractéristiques de l'invention :
- la bride comporte une série de trous axiaux de fixation répartis régulièrement autour de l'axe du corps de joint dont chacun est muni d'un élément de renfort;
- chaque élément de renfort est un insert métallique tubulaire;
- le corps de joint comporte une série de voiles axiaux venus de matière avec la bride et qui s'étendent axialement depuis une face radiale de la bride en direction de la surface périphérique externe de l'enveloppe;
- la masse de matériau de remplissage s'étend sur toute la surface périphérique externe de l'enveloppe du corps de joint; et
- la masse de matériau de remplissage s'étend à l'intérieur de l'enveloppe pour former une paroi de fermeture d'une extrémité axiale de l'enveloppe du corps de joint.

D'autres caractéristiques et avantages de l'invention apparaîtront à la lecture de la description détaillée qui va suivre pour la compréhension de laquelle on se reportera au dessin annexé dans lequel :
- la figure 1 est une vue en coupe axiale selon la ligne 1-1 de la figure 2 d'un joint de transmission dont le corps de joint est réalisé conformément aux enseignements de l'invention;
- la figure 2 est une demi-vue en section selon la ligne 2-2 de la figure 1; et
- la figure 3 est une demi-vue selon la flèche F de la figure 1.

On a représenté aux figures un joint de transmission 10 prévu pour relier un arbre 12 à un autre arbre. ou à un organe de transmission (non représenté).

D'une manière connue, l'extrémité libre 14 de l'arbre 12 comporte un tripode 16 dont chaque bras 18 est équipé d'un galet 20.

Le tripode 16 coopère avec un corps de joint de transmission 22.

Le corps de joint 22, également appelé tulipe ou barillet, est du type à structure composite comportant une enveloppe 24 qui délimite un espace interne qui est partiellement rempli par une masse de matériau de remplissage 26.

Le corps de joint 22 comporte également des chemins de roulement pour les galets 20 du tripode 16.

Chaque chemin de roulement comprend deux pièces métalliques 28 qui sont associées à l'enveloppe par le matériau de remplissage 26.

Dans le mode de réalisation représenté aux figures, les pièces 28 sont noyées dans le matériau de remplissage 26, la structure du corps de joint 22 étant similaire à celle décrite et représentée dans la demande de brevet EP-A-0335781 au contenu de laquelle on pourra se reporter pour en connaître les diverses caractéristiques de structure et de réalisation.

Le matériau de remplissage 26 est constitué d'une matrice thermodurcissable ou thermoplastique qui est renforcée de fibres courtes ou de particules.

Afin d'assurer la liaison du corps de joint 22 à un organe de transmission, celui-ci comporte une bride radiale de liaison 30.

Dans le mode de réalisation représenté aux figures, la bride 30 s'étend dans un plan radial situé sensiblement au voisinage de la face d'extrémité axiale 32 du corps de joint 22 situé à l'opposé de l'arbre 12.

Conformément à l'invention, la bride radiale 30 est réalisée en matériau composite du type comportant une matrice thermodurcissable ou thermoplastique renforcée de fibres courtes ou de particules.

Dans le mode de réalisation préféré selon l'invention, c'est le même matériau qui constitue la masse de matériau de remplissage 26 et la bride 30.

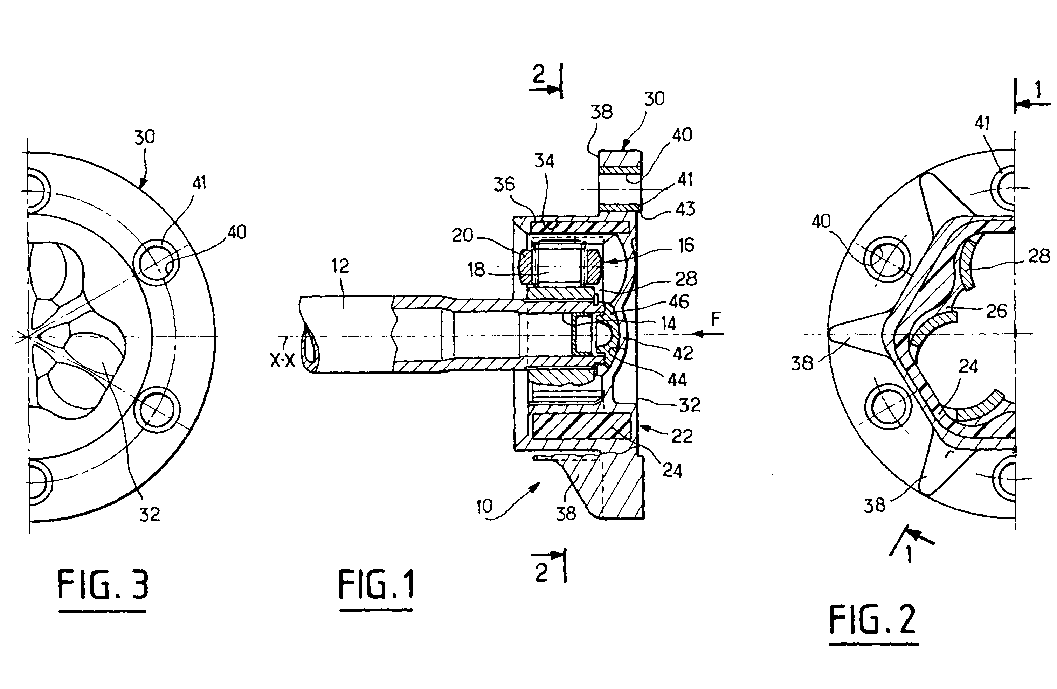

A cet effet la masse de matériau 26 s'étend axialement à l'extérieur de l'espace radial interne délimité par l'enveloppe périphérique 24 par l'extrémité axiale, de droite en considérant la figure 1, du corps de joint 22 puis radialement pour constituer la bride 30, cette dernière étant réalisée en une seule fois lors de l'opération de moulage par injection du matériau 26 à l'intérieur et autour de l'enveloppe 24.

Le matériau 26 s'étend également sensiblement sur toute la surface périphérique externe 34 de l'enveloppe 24 pour former une couche périphérique 36.

La bride comporte également plusieurs voiles 38 venus de matière lors du moulage qui s'étendent dans des plans axiaux pour relier la face radiale 38 de la bride à la surface périphérique externe de l'enveloppe 24.

Dans le mode de réalisation représenté aux figures, la bride radiale 30 comporte six trous axiaux de liaison 40.

Chaque trou 40 est réalisé sous la forme d'un insert métallique tubulaire creux 41 qui, comme les pistes 28, sont noyés dans la masse de matériau composite lors de l'opération de moulage du corps de joint de transmission.

Les inserts 41 sont ici des tronçons de tube à alésage lisse 40 mais ils pourraient, selon les applications envisagées, être remplacés par des tubes taraudés ou par des goujons ou tout autre moyen de liaison permettant d'assurer la fixation de la bride 30 sur un organe de transmission.

Du fait de l'utilisation d'une bride radiale pour assurer la liaison du corps de joint, il est particulièrement avantageux, selon un autre aspect de l'invention, de réaliser une paroi 42 de fermeture de l'extrémité axiale ouverte du corps de joint 22 venue directement de moulage par le matériau de remplissage 26.

La paroi 42, outre sa fonction de fermeture, peut comporter un profil interne 44, par exemple en forme de calotte sphérique, qui est complémentaire du profil externe du bouchon 46 d'extrémité de l'arbre 12, ces deux surfaces coopérant en fonction de l'angle de brisure du joint.

La paroi cylindrique externe des inserts dans sa partie 43 qui, selon une caractéristique de l'invention, n'est pas entourée par le matériau composite, constitue une référence géométrique précise pour le centrage du corps de joint lors de son assemblage au moyen de la bride.

La paroi de fermeture 42 constitue également une surface de butée axiale du déplacement de l'arbre 12 lorsque, comme dans le cas du mode de réalisation représenté aux figures, le joint de transmission est un joint du type coulissant.

La réalisation de la bride radiale 30 par moulage d'un matériau composite, outre le fait qu'elle en réduit notablement le poids, permet d'une manière très aisée d'en faire varier le dessin pour une même conception du corps de joint 22. Ces variantes peuvent concerner notamment la position axiale de la bride 30 par rapport au corps de joint, ses dimensions, ainsi que le nombre des trous 40 et inserts de liaison 42 et la position radiale de ceux-ci par rapport à l'axe X-X du corps de joint 22 et le choix des matériaux constitutifs.

L'invention n'est pas limitée aux joints de transmission du type tripode ni aux joints coulissants mais trouve à s'appliquer à tous les corps de joint de transmission quelle que soit la conception des éléments d'articulation et des chemins de portée qui les reçoivent.

## Revendications

1. Corps de joint de transmission (22) à structure composite, comportant une enveloppe (24) réalisée en un matériau composite des chemins (28) de portée d'éléments d'articulation (20) d'un joint de transmission (10) disposés à l'intérieur de ladite enveloppe, cette dernière et les chemins de portée étant au moins en partie noyés dans une masse de matériau (26) de remplissage constitué d'une matrice thermodurcissable ou thermoplastique renforcée de fibres courtes ou de particules, et un système de liaison du corps de joint, caractérisé en ce que le système de liaison du corps de joint comporte une bride radiale (30) qui s'étend radialement à l'extérieur de l'enveloppe (24), et qui est formée par une extension axiale et radiale de ladite masse de matériau de remplissage (26).

2. Corps de joint selon la revendication 1, caractérisé en ce que la bride (30) comporte une série de trous axiaux de fixation (40) répartis régulièrement autour de l'axe (X-X) du corps de joint dont chacun est muni d'un élément de renfort (41).

3. Corps de joint selon la revendication 2, caractérisé en ce que chaque élément de renfort (41) est un insert métallique tubulaire.

4. Corps de joint selon la revendication 3, caractérisé en ce que les inserts métalliques constituent des moyens de centrage du corps de joint.

5. Corps de joint selon l'une quelconque des revendications précédentes, caractérisé en ce qu'il comporte une série de voiles axiaux (38) venus de matière avec la bride (30) et qui s'étendent axialement depuis une face radiale (38) de la bride en direction de la surface périphérique externe (34) de l'enveloppe.

6. Corps de joint selon la revendication 1, caractérisé en ce que la masse de matériau de remplissage (26) s'étend sur toute la surface périphérique externe (34) de l'enveloppe (24) du corps de joint (22).

7. Corps de joint selon la revendication 1, caractérisé en ce que la masse de matériau de remplissage (26) s'étend à l'intérieur de l'enveloppe (24) pour former une paroi (42) de fermeture d'une extrémité axiale de l'enveloppe du corps de joint.

8. Corps de joint selon l'une quelconque des revendications prévédentes, caractérisé en ce que les chemins de portée sont délimités par des pièces métalliques (28) en partie noyées dans la masse de matériau de remplissage (26).

9. Corps de joint selon la revendication 8, caractérisé en ce que chaque chemin de portée est délimité par deux pièces métalliques (28).

## Patentansprüche

1. Übertragungsgelenkkörper (22) mit Verbundstruktur, bestehend aus einer Hülle (24) aus einem Verbundmaterial, Tragebahnen (28) von Gelenkselementen (20) eines Übertragungsgelenks (10), die im Inneren dieser Hülle angeordnet sind, wobei letztgenannte und die Tragebahnen zumindest zum Teil in einer Füllmaterialmasse (26) versenkt sind, die von einer duroplastischen oder thermoplastischen Matrix gebildet wird, die mit kurzen Fasern oder Teilchen verstärkt ist, und einem Verbindungssystem für den Gelenkkörper, dadurch gekennzeichnet, daß das verbindungssystem des Gelenkkörpers einen Radialflansch (30) umfaßt, der sich radial außerhalb der Hülle (24) erstreckt und durch eine axiale und radiale Erweiterung der Füllmaterialmasse (26) gebildet wird.

2. Gelenkkörper nach Anspruch 1, dadurch gekennzeichnet, daß der Flansch (30) eine Reihe von Axiallöchern zur Befestigung (40) umfaßt, die regelmäßig um die Achse (X-X) des Gelenkkörpers verteilt und jeweils mit einem Verstärkungselement (41) versehen sind.

3. Gelenkkörper nach Anspruch 2, dadurch gekennzeichnet, daß jedes Verstärkungselement (41) einen röhrenförmigen metallischen Einsatz darstellt.

4. Gelenkkörper nach Anspruch 3, dadurch gekennzeichnet, daß die metallischen Einsätze Mittel zur Zentrierung des Gelenkkörpers darstellen.

5. Gelenkkörper nach einem der vorhergehenden Ansprüche, dadurch gekennzeichnet, daß er eine Reihe von Axialabdeckungen (38) aus demselben Material wie der Flansch (30) umfaßt, die sich axial von einer Radialfläche (38) des Flansches in die Richtung der äußeren Peripheriefläche (34) der Hülle (24) erstrecken.

6. Gelenkkörper nach Anspruch 1, dadurch gekennzeichnet, daß sich die Füllmaterialmasse (26) auf der gesamten äußeren Peripheriefläche (34) der Hülle (24) des Gelenkkörpers (22) erstreckt.

7. Gelenkkörper nach Anspruch 1, dadurch gekennzeichnet, daß sich die Füllmaterialmasse (26) im Inneren der Hülle (24) erstreckt, um eine Wandung (42) zum Verschließen eines Axialendes der Hülle des Gelenkkörpers zu bilden.

8. Gelenkkörper nach einem der vorhergehenden Ansprüche, dadurch gekennzeichnet, daß die Tragebahnen von Metallteilen (28) begrenzt werden, die zum Teil in der Füllmaterialmasse (26) versenkt sind.

9. Gelenkkörper nach Anspruch 8, dadurch gekennzeichnet, daß jede Tragebahn von zwei Metallteilen (28) begrenzt wird.

## Claims

1. Transmission joint body (22) of composite structure, comprising a casing (24) made of a composite material, travel paths (28) for articulation elements (20) of a transmission joint (10) which are located inside said casing, the latter and the travel paths being at least partly embedded in a mass of filling material (26) consisting of a thermosetting or thermoplastic matrix reinforced with short fibres or particles, and a connecting system for the joint body, characterised in that the connecting system for the joint body comprises a radial flange (30) extending radially to the outside of the casing (24) and formed by an axial and radial extension of said mass of filling material (26).

2. Joint body according to claim 1, characterised in that the flange (30) comprises a series of axial fixing holes (40) regularly distributed about the axis (X-X) of the joint body, each one of which is provided with a reinforcing element (41).

3. Joint body according to claim 2, characterised in that each reinforcing element (41) is a tubular metal insert.

4. Joint body according to claim 3, characterised in that the metal inserts constitute means for centring the joint body.

5. Joint body according to any one of the preceding claims, characterised in that it comprises a series of axial webs (38) integrally formed with the flange (30) and extending axially from a radial surface (38) of the flange towards the outer peripheral surface (34) of the casing.

6. Joint body according to claim 1, characterised in that the mass of filling material (26) extends over the entire outer peripheral surface (34) of the casing (24) of the joint body (22).

7. Joint body according to claim 1, characterised in that the mass of filling material (26) extends inside the casing (24) to form a closing wall (42) for an axial end of the casing of the joint body.

8. Joint body according to any one of the preceding claims, characterised in that the travel paths are defined by metal components (28) partly embedded in the mass of filling material (26).

9. Joint body according to claim 8, characterised in that each travel path is defined by two metal parts (28).
